# EUROPEAN PATENT APPLICATION

(11) **EP 4 648 208 A1**
(43) Date of publication of application: **12.11.2025**
(21) Application number: 24775037.5
(22) Date of filing: 11.01.2024
(51) Int. Cl.: H01M 50/526, H01M 50/503, H01M 50/30

(54) **INTER-MODULE BUSBAR**

(30) Priority: 21.03.2023 KR 20230036953
(71) Applicant: LG Energy Solution, Ltd., Seoul 07335 (KR)
(72) Inventor: HWANG, Sung Tack, Daejeon 34122 (KR)
(74) Representative: Plasseraud IP
(86) International application number: PCT/KR2024/000568
(87) International publication number: WO 2024/195989

(57) **Abstract**

The present invention relates to an inter-module busbar, and particularly, the present invention provides a secondary battery including: a conductive unit that electrically connects a plurality of objects to each other; a first insulation layer that surrounds the conductive unit; and a second insulation layer that surrounds the first insulation layer, wherein a discharge line, which communicates with the outside and is provided to discharge a gas, is defined in the first insulation layer.

## Description

### TECHNICAL FIELD

### CROSS-REFERENCE TO RELATED APPLICATION

The present application claims the benefit of the priority of Korean Patent Application No. 10-2023-0036953, filed on March 21, 2023, which is hereby incorporated by reference in its entirety.

### TECHNICAL FIELD

The present invention relates to an inter-module busbar, and more particularly, to an inter-module busbar capable of discharging liquids and gases generated from the busbar.

### BACKGROUND ART

Currently commercialized secondary batteries include nickel-cadmium batteries, nickel-hydrogen batteries, nickel-zinc batteries, lithium secondary batteries, and the like. Among these secondary batteries, the lithium secondary batteries are favored owing to merits that compared to nickel-based secondary batteries, the lithium secondary batteries hardly have memory effects to be freely chargeable and dischargeable, and have very low self-discharge rate and high energy density.

Recently, the secondary batteries are widely used in not only small-sized devices such as portable electronic devices, but also medium to large-sized devices such as vehicles or power storage systems (ESS). When the secondary batteries are used in these medium to large-sized devices, a plurality of secondary batteries are electrically connected to each other to provide battery modules or battery packs in order to increase capacity and output.

Busbars are widely used as electrical connection means for high current flow between the battery modules or the battery packs. The busbars are generally made of copper or aluminum materials and are manufactured in the form of rigid plates having constant widths, thicknesses and lengths. These busbars have excellent electrical conductivity, and thus are less in energy loss and safer for high current flow compared to general cables.

Among the busbars, a busbar used for connection between the battery modules is referred to as an inter-module busbar. Two neighboring battery modules may be electrically connected to each other by using an inter-module busbar as a medium. In other words, current may flow between an electrode terminal of one battery module and an electrode terminal of the other battery module by using the inter-module busbar as a medium. In this pattern, a plurality of battery modules may be connected to each other in series to provide a high output battery pack.

However, in the inter-module busbar, as current continuously flows through the busbar, high-temperature heat may be generated from the busbar. And due to the generated heat, physical or chemical properties of an insulator that surrounds the busbar may be changed, and gases and liquids may be discharged. The gases and liquids thus discharged may form a predetermined pressure inside the insulator, and there are problems that when a pressure of a certain level or more is formed, the insulator may be damaged to expose a metal portion of the busbar to the outside.

### DISCLOSURE OF THE INVENTION

### TECHNICAL PROBLEM

An object of the present invention for solving the above problems is to provide an inter-module busbar capable of rapidly discharging liquids and gases generated from an insulator that surrounds the busbar to the outside to prevent a damage to the insulator.

### TECHNICAL SOLUTION

According to a first embodiment of the present invention, the present invention provides an inter-module busbar including: a conductive unit that electrically connects a plurality of objects to each other; a first insulation layer that surrounds the conductive unit; and a second insulation layer that surrounds the first insulation layer, wherein a discharge line, which communicates with the outside and is provided to discharge a gas, is defined in the first insulation layer.

The inter-module busbar may further include a coating layer disposed between the first insulation layer and the conductive unit to coat a surface of the conductive unit with a powder.

The coating layer may have a surface roughness that is greater than a surface roughness of the conductive unit.

The coating layer may have a surface roughness that is less than a surface roughness of the conductive unit.

The first insulation layer may be in close contact with the coating layer.

The first insulation layer may include a silicone material.

The discharge line may include: a first discharge hole defined in an outer surface of the first insulation layer, and exposed to the outside; and a communication line having one end connected to the first discharge hole, extending in a longitudinal direction of the first insulation layer, and provided to define an empty space inside the first insulation layer.

The first discharge hole may be defined in one end of the first insulation layer, and provided at a position spaced a predetermined distance from the second insulation layer.

The discharge line may further include a second discharge hole defined in the other end of the communication line, wherein the second discharge hole is defined in the other end of the first insulation layer.

The discharge line may be provided in plurality, wherein the plurality of discharge lines are disposed to be parallel to each other in a longitudinal direction of the first insulation layer, and are disposed to be spaced apart from each other according to a predetermined arrangement.

The discharge lines may be disposed to be more biased to a direction in which the second insulation layer is disposed.

The conductive unit may connect a plurality of secondary battery modules to each other.

The conductive unit may include: a connecting part; and a coupling part provided in each of both distal ends of the connecting part to be coupled to the secondary battery module.

The second insulation layer may be a mica tape including a mica material.

According to a second embodiment of the present invention, the present invention provides a secondary battery module assembly including: a plurality of secondary battery modules; and an inter-module busbar that electrically connects the secondary battery modules to each other, wherein the inter-module busbar includes a conductive unit that electrically connects the plurality of secondary battery modules to each other, a first insulation layer that surrounds the conductive unit, and a second insulation layer that surrounds the first insulation layer, wherein a discharge line, which communicates with the outside and is provided to discharge a gas, is defined in the first insulation layer.

### ADVANTAGEOUS EFFECTS

The present invention may provide the inter-module busbar with the improved safety, which is capable of discharging the liquids and gases generated from the insulator that surrounds the busbar to the outside to prevent the damage to the insulator, and prevent the metal portion of the busbar from being exposed to the outside.

### BRIEF DESCRIPTION OF THE DRAWINGS

FIG. 1 is a perspective view illustrating a configuration of an inter-module busbar according to a first embodiment of the present invention.
FIG. 2 is a perspective view illustrating a configuration of a conductive unit according to a first embodiment of the present invention.
FIG. 3 is a perspective view illustrating a state in which a conductive unit is coated with a coating layer according to a first embodiment of the present invention.
FIGS. 4A and 4B are cross-sectional views illustrating a surface of the conductive unit taken along a virtual line CC' in FIG. 3 according to a first embodiment of the present invention.
FIG. 5 is a cross-sectional view illustrating a surface of the inter-module busbar taken along a virtual line AA' in FIG. 1 according to a first embodiment of the present invention.
FIGS. 6A and 6B are plan views illustrating discharge lines defined inside a first insulation layer that surrounds a conductive unit according to embodiments of the present invention.
FIG. 7 is an enlarged front view illustrating a portion "B" n FIG. 1.

### MODE FOR CARRYING OUT THE INVENTION

Hereinafter, the present invention will be described in more detail with reference to the accompanying drawings. The accompanying drawings are included to provide a further understanding of the present invention, and illustrate merely an embodiment of the present invention. The scope of the present invention is not limited by the drawings. In the accompanying drawings, like reference numerals refer to like elements throughout. Some components may be exaggerated, reduced, or omitted to easily understand the present invention.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### First embodiment

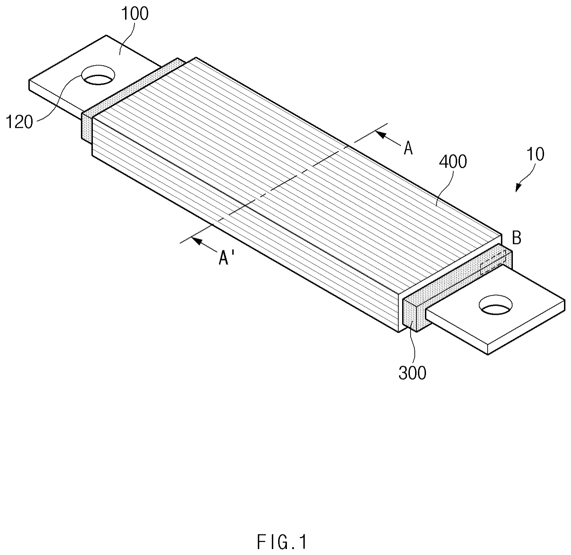

Referring to FIG. 1, as a first embodiment of the present invention, an inter-module busbar 10 according to the present invention may include a conductive unit 100, a coating layer 200, a first insulation layer 300, and a second insulation layer 400.

The inter-module busbar 10 may be disposed between a plurality of objects, which require an electrical connection, to electrically connect the plurality of objects to each other. For example, there are a case of electrically connecting one secondary battery module to the other secondary battery module, a case of electrically connecting a secondary battery module to a relay box, a case of electrically connecting a secondary battery module to other electronic component, a case of electrically connecting electronic components to each other, and the like. However, the present invention is not limited to the foregoing cases.

The conductive unit 100 may include an electrically conductive metal material such as cooper, aluminum, silver, or gold, so as to electrically connect the plurality of objects to each other.

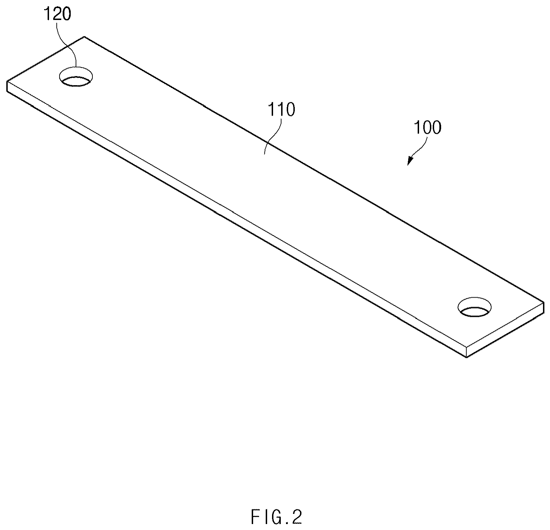

Referring to FIG. 2, the conductive unit 100 may be provided in the form of a metal piece, a metal plate, a metal bar, or the like, each of having a predetermined thickness and length, and may include a connecting part 110 and coupling parts 120.

The connecting part 110 may be disposed at a central area of the conductive unit 100 in a longitudinal direction, and disposed between the coupling parts 120. The connecting part 110 may connect the plurality of coupling parts 120 to each other, and electrically connect objects, such as secondary battery modules (not shown) to be coupled to the coupling parts 120, to each other.

The connecting part 110 may have a linear shape, a bending shape, a curved surface shape, or the like according to positions and shapes of a plurality of objects to be connected through the conductive unit 100.

The coupling parts 120 may be disposed, respectively, in both distal ends of the connecting part 110 in the longitudinal direction of the conductive unit 100. Each of the plurality of coupling parts 120 may be coupled to an electrode terminal of an object to be electrically connected by the conductive unit 100, and the objects connected to the plurality of coupling parts 120 may be electrically connected to each other in series or in parallel through the connecting part 110.

The coupling part 120 may include a through-hole shape passing through the largest one of surfaces of the conductive unit 100. A screw, a rivet, a bolt, a nut, and the like may be coupled to a through-hole of the coupling part 120 together with the objects such as the secondary battery module (not shown), and the coupled objects may be electrically connected to each other.

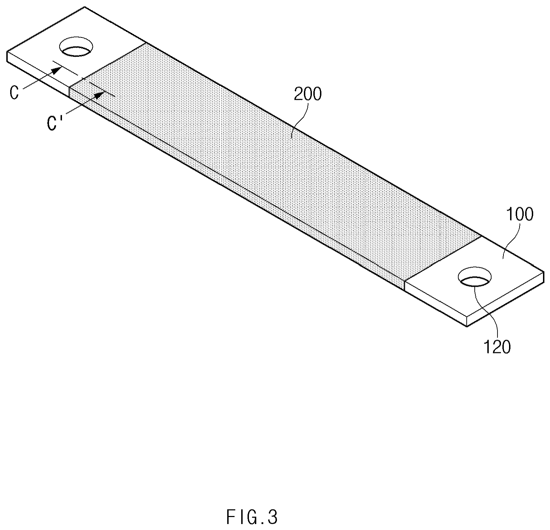

Referring to FIG. 3, each of coating layers 200 and 201 may be disposed between the first insulation layer 300 and the conductive unit 100 to coat a surface of the conductive unit 100, and may induce the first insulation layer 300 to be in close contact with the conductive unit 100.

For example, the coating layers 200 and 201 may mean coating on the surface of the conductive unit 100 through a method such as plating in which the surface of the conductive unit 100 is coated with a different metal from the conductive unit 100, case hardening in which carbon, nitrogen, or the like is introduced through heat treatment to harden the surface of the conductive unit 100, chemical coatings in which a chemical coating is formed on the surface of the conductive unit 100 through chemical treatment such as a zinc phosphate coating or chromate treatment, anodizing in which a thickness of an oxide layer on a metal surface is artificially increased, lining liquid coating in which the conductive unit 100 is coated with rubber, synthetic resin, or the like, or painting in which the conductive unit 100 is coated with a material in liquids or powder form. However, the coating layers 200 and 201 are not limited thereto. The coating layers 200 and 201 may be coating on the conductive unit 100 with a material in powder form.

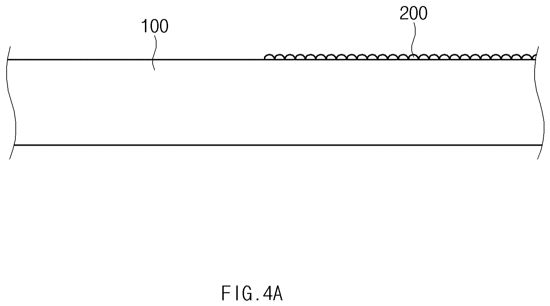

Referring to FIG. 4A, as one embodiment of the coating layer, the coating layer 200 may be coating on a smooth surface of the conductive unit 100 made of a metal material with particles having a predetermined size. Thus, the coating layer 200 may have a surface roughness that is greater than a surface roughness of the conductive unit 100. As the coating layer 200 is provided between the first insulation layer 300 and the conductive unit 100 and on the surface of the conductive unit 100, an inner surface of the first insulation layer 300 may be in contact with a surface of the coating layer 200, and the first insulation layer 300 may be in close contact with the conductive unit 100 due to the surface of the coating layer 200 that is rougher than the surface of the first insulation layer 300.

The coating layer 200 may be formed using a method in which particles in powder form and having a predetermined size are electrically charged as positive or negative electric charges by subjecting the particles to high-speed friction with a substance such as Teflon, or by using an electromagnetic field generated by a high-voltage generator, and then the charged particles are sprayed to be applied onto the surface of the conductive unit 100. For example, the coating layer 200 may include one or more of plastic powder materials such as epoxy, polyester, polyethylene, polyvinyl chloride, nylon, polyurethane, and acryl. However, the coating layer 200 is not limited thereto.

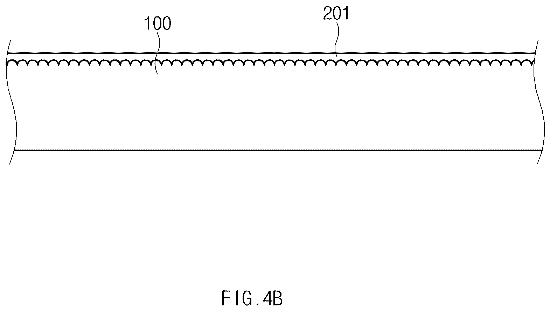

Referring to FIG. 4B, as another embodiment of the coating layer, the coating layer 201 may include particles having a very small size so that the surface of the conductive unit 100 is coated to be smoother. When the surface of the conductive unit 100 is formed to be irregular but not smooth according to a process for manufacturing the conductive unit 100, the surface of the conductive unit 100 may be coated to be smooth while filling gaps of the irregular surface of the conductive unit 100 with the very-small-size particles of the coating layer 201, so that the surface of the conductive unit 100 is smooth and flat.

When the conductive unit 100 is coated with the coating layer 201, the coating layer 201 and the first insulation layer 300 may be in close contact with each other. Even when the first insulation layer 300 that surrounds the coating layer 201 is gradually ceramized to be hardened with continuous and repeated use, the coating layer 201 having the smooth surface and the first insulation layer 300 may be in close contact with each other.

The coating layer 201 may be formed using a method in which particles in powder form and having a predetermined size are electrically charged as positive or negative electric charges by subjecting the particles to high-speed friction with a substance such as Teflon, or by using an electromagnetic field generated by a high-voltage generator, and then the charged particles are sprayed to be applied onto the surface of the conductive unit 100. For example, the coating layer 201 may include one or more of plastic powder materials such as epoxy, polyester, polyethylene, polyvinyl chloride, nylon, polyurethane, and acryl. However, the coating layer 200 is not limited thereto.

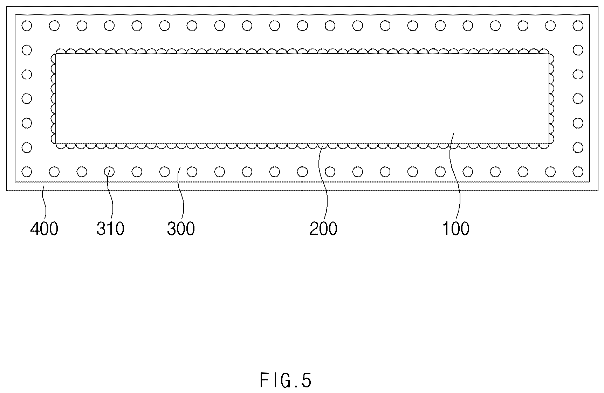

Referring to FIG. 5, the first insulation layer 300 may be provided to surround the conductive unit 100. More specifically, the first insulation layer 300 may be provided to surround the conductive unit 100 coated with the coating layers 200 and 201. As the first insulation layer 300 surrounds the conductive unit 100, an area of the conductive unit 100, which may be exposed to the outside, may be prevented from being exposed to the outside to prevent an electrical short-circuit that occurs when the conductive unit 100 is in contact with surrounding objects.

The first insulation layer 300 may be provided to surround not only the connecting part 110 coated with the coating layers 200 and 201, but also the coupling parts 120 around the connecting part 110.

The first insulation layer 300 may include at least one of materials having electrically insulative properties, for example, polyvinyl chloride, polypropylene, polyethylene, polyurethane, synthetic rubber, ceramic, silicone, silicone rubber, synthetic resin, or the like. The first insulation layer 300 may include a material such as silicone or silicone rubber.

An inner surface, which surrounds the conductive unit 100, of the first insulation layer 300 may be in contact with the coating layers 200 and 201, and be in close contact with the irregular surfaces or smooth surfaces of the coating layers 200 and 201.

The first insulation layer 300 may include a flexible material having flexibility and capable of being elastically deformed. Thus, a surface shape of the inner surface of the first insulation layer 300, which is in contact with the surfaces of the coating layers 200 and 201 may be elastically deformed according to a surface shape of the coating layer 200, and the inner surface of the first insulation layer 300 may be tightly attached to the surface of the coating layer 200. Accordingly, the first insulation layer 300 may be disposed to be in close contact with the conductive unit 100.

Even when the inter-module busbar 10 according to the present invention is changed in shape, for example, bending, the first insulation layer 300 may be deformed to correspond to the changed shape. Even when the first insulation layer 300 is changed in shape, for example, warping, bending, or the like, adhesion between the first insulation layer 300 attached to the coating layers 200 and 201, and the coating layers 200 and 201 may be maintained. Accordingly, adhesion between the first insulation layer 300 and the conductive unit 100 may be also maintained.

As the conductive unit 100 is coupled to an electrode terminal of each of a plurality of objects so to electrically connect the objects to each other, and current continuously flows through the conductive unit 100, high-temperature heat may be generated from the conductive unit 100. The heat generated from the conductive unit 100 may directly or indirectly affect the coating layers 200 and 201 or the first insulation layer 300 to cause the coating layers 200 and 201 or the first insulation layer 300 to be physically or chemically deformed. As the coating layers 200 and 201 or the first insulation layer 300 are physically or chemically deformed, liquids or gases may be generated, and when the generated liquids or gases are accumulated without being immediately discharged to the outside, a resulting pressure may cause the first insulation layer 300 and the second insulation layer 400 to be damaged. Thus, a means capable of rapidly discharging the liquids and gases may be required. Accordingly, discharge lines 310 and 320, which communicate with the outside and are provided to discharge the gases and the liquids, may be defined in the first insulation layer 300.

As the first insulation layer 300 is continuously and repeatedly exposed to heat or the like, the first insulation layer 300 may be physically or chemically deformed, and be gradually ceramized to be hardened. When the first insulation layer 300 is hardened, micro gaps may be formed in the inside thereof, and the micro gaps may be connected to communicate with the discharge lines 310 and 320. When the micro gaps formed inside the first insulation layer 300 are connected to the discharge lines 310 and 320, the liquids or gases generated from the coating layers 200 and 201 or the first insulation layer 300 may flow into the discharge lines 310 and 320 through the gaps, and may be discharged to the outside through the discharge lines 310 and 320.

The discharge lines 310 and 320 may be defined inside the first insulation layer 300, and extend in a longitudinal direction of the first insulation layer 300. The first insulation layer 300 may include a silicone material, a silicone rubber material, or the like so as to be permeable to vapours and gases, and the gasses generated from the first insulation layer 300 and the coating layers 200 and 201 may pass through the first insulation layer 300 to reach the discharge lines 310 and 320.

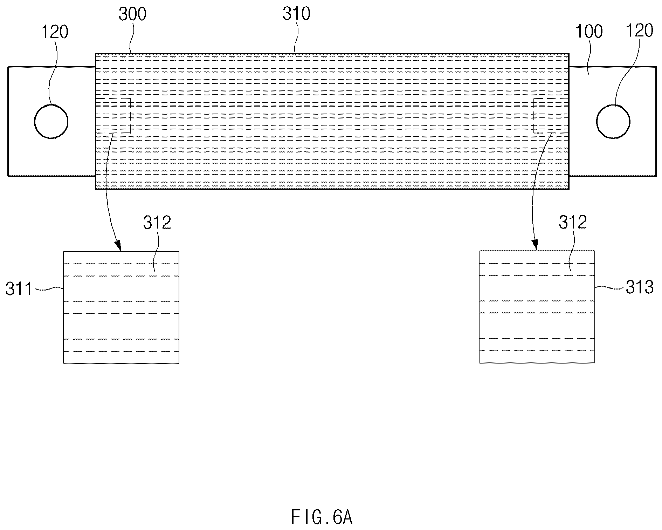

Referring to FIG. 6A, as one embodiment of the discharge lines 310 and 320, the discharge line 310 may include a first discharge hole 311, a communication line 312, and a second discharge hole 313.

The first discharge hole 311 may be defined in an outer surface of the first insulation layer 300 to be exposed to the outside so that the liquids and gases discharged through the communication line 312 are discharged to the outside.

The first discharge hole 311 may be defined in one end of the first insulation layer 300, and be provided at a position spaced a predetermined distance from the second insulation layer 400. As the second insulation layer 400 that surrounds the first insulation layer 300 is disposed at a position spaced apart from the first discharge hole 311, the first discharge hole 311 may not be closed by the second insulation layer 400, and may allow the liquids and the gases to be discharged to the outside.

The communication line 312 is a space through which the liquids and gases generated from the first insulation layer 300 and the coating layer 200 are discharged, and may have a structure in which the communication line 312 has one end connected to the first discharge hole 311, and the other end connected to the second discharge hole 313 to pass through the first insulation layer 300.

The communication line 312 may be defined inside the first insulation layer 300 in the longitudinal direction of the first insulation layer 300.

The communication line 312 may be provided to define an empty space inside the first insulation layer 300 so that the liquids and gases generated from the first insulation layer 300 and the coating layers 200 and 201 flow toward the first discharge hole 311 or the second discharge hole 313.

The communication line 312 may have an inner bottom surface that includes an inclined surface inclined downward toward the first discharge hole 311 and the second discharge hole 313, so that the liquids generated from the first insulation layer 300 and the coating layers 200 and 201 flow toward the first discharge hole 311 and the second discharge hole 313.

The communication line 312 may increase a surface area of the first insulation layer 300, and thus allow heat received from the conductive unit 100 to be rapidly cooled through the liquids and gases flowing through the communication line 312.

As the empty space is defined inside the first insulation layer 300 in the longitudinal direction of the first insulation layer 300, the communication line 312 may provide a space capable of not only allowing the flow of the liquids and the gases, but also absorbing an impact that may be generated when the first insulation layer 300 is physically or chemically deformed by the hot-temperature heat generated from the conductive unit 100.

The communication line 312 may be defined in a linear shape having a minimum distance from the one end to the other end of the first insulation layer 300 in the longitudinal direction of the first insulation layer 300, so that the liquids and gases flowing into the communication line 312 are rapidly discharged to the outside.

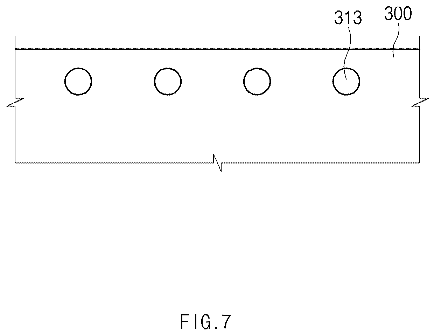

Referring to FIG. 7, the second discharge hole 313 may be defined in an outer surface of the first insulation layer 300 to be exposed to the outside so that the liquids and gases discharged through the communication line 312 are discharged to the outside.

The second discharge hole 313 may be defined in the other end of the first insulation layer 300, and be provided at a position spaced a predetermined distance from the second insulation layer 400. As the second insulation layer 400 that surrounds the first insulation layer 300 is disposed at a position spaced apart from the second discharge hole 313, the second discharge hole 313 may not be closed by the second insulation layer 400, and may allow the liquids and the gases to be discharged to the outside.

The communication line 312 may have one end in which the first discharge hole 311 is defined, and the other end in which the second discharge hole 313 is defined, and the discharge lines 310 may pass through the first insulation layer 300 in the longitudinal direction. Thus, the liquids and gases generated from the coating layers 200 and 201 and the first insulation layer 300 to be discharged to the communication line 312 may flow along the communication line 312, and then be discharged to the outside through the first discharge hole 311 and the second discharge hole 313 in both directions.

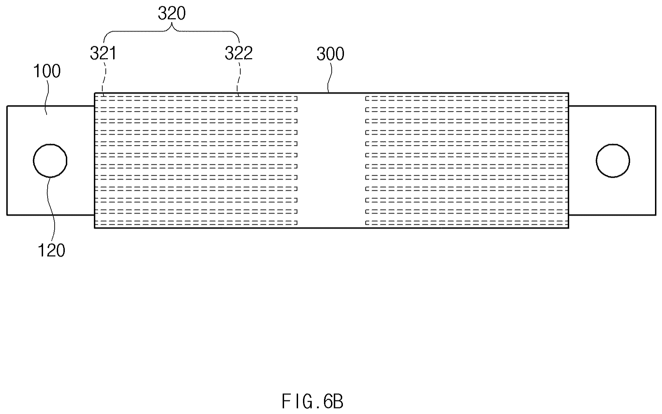

Referring to FIG. 6B, as another embodiment of the discharge lines 320, the discharge line 320 may include a first discharge hole 321 and a communication line 322.

The first discharge hole 321 may be defined in an outer surface of the first insulation layer 300 to be exposed to the outside so that the liquids and gases discharged through the communication line 322 are discharged to the outside.

The first discharge hole 321 may be defined in each of one end and the other end of the first insulation layer 300, and be provided at a position spaced a predetermined distance from the second insulation layer 400. As the second insulation layer 400 that surrounds the first insulation layer 300 is disposed at a position spaced apart from the first discharge hole 321, the first discharge hole 321 may not be closed by the second insulation layer 400, and may allow the liquids and the gases to be discharged to the outside.

The communication line 322 may be a space defined so that the liquids and gases generated from the first insulation layer 300 and the coating layer 200 are discharged to flow in a direction in which the first discharge hole 321 is defined, and may be an empty space defined to extend from the first discharge hole 321, which is defined in each of the one end and the other end of the first insulation layer 300, toward a central portion of the first insulation layer 300 in the longitudinal direction.

The communication line 322 may have a structure having one end in which the first discharge hole 321 is disposed, and the other end which is closed. The liquids and gases discharged to the communication line 322 may flow along the communication line 322, and be discharged through the first discharge hole 321.

The communication line 322 may have an inner bottom surface that includes an inclined surface inclined downward toward the first discharge hole 321, so that the liquids generated from the first insulation layer 300 and the coating layers 200 and 201 flow toward the first discharge hole 321.

The communication line 322 may be defined inside a body of the first insulation layer 300 in the longitudinal direction of the first insulation layer 300.

The communication line 322 may increase a surface area of the first insulation layer 300, and thus allow heat received from the conductive unit 100 to be rapidly cooled through the liquids and gases flowing through the communication line 322.

As the empty space is defined inside the first insulation layer 300 in the longitudinal direction of the first insulation layer 300, the communication line 322 may provide a space capable of not only allowing the flow of the liquids and the gases, but also absorbing an impact that may be generated when the first insulation layer 300 is physically or chemically deformed by the hot-temperature heat generated from the conductive unit 100.

A plurality of discharge lines 320 may be provided in the first insulation layer 300.

The plurality of discharge lines 320 may be disposed to be parallel to each other in the longitudinal direction of the first insulation layer 300, and be disposed in an inner area of edges of the first insulation layer 300 along the edges so that the discharge lines 320 are spaced apart from each other according to a predetermined arrangement.

The discharge lines 320 may be disposed between the coating layers 200 and 201 and the second insulation layer 400. The discharge lines 320 may be disposed to be more biased to a direction in which the second insulation layer 400 is disposed than a direction in which the coating layer 200 is disposed, or alternatively may be disposed to be more biased to the direction in which the coating layers 200 and 201 are disposed than the direction in which the second insulation layer 400 is disposed, or may be disposed along a central area between the second insulation layer 400 and the coating layers 200 and 201.

As the discharge lines 320 are disposed to be more biased to the direction in which the second insulation layer 400 is disposed than the direction in which the coating layers 200 and 201 are disposed, the gases and liquids generated from the first insulation layer 300 and the coating layers 200 and 201 may be discharged through the discharge lines 320 to prevent the second insulation layer 400 from being damaged due to a pressure of the liquids and gases.

The second insulation layer 400 may be provided to surround the first insulation layer 300. The second insulation layer 400 may be provided to entirely surround the first insulation layer 300 along the edges of the first insulation layer 300, or to only partially surround the first insulation layer 300 along the edges. In addition, the second insulation layer 400 may surround to press the first insulation layer 300, and accordingly, adhesion between the first insulation layer 300 and the coating layers 200 and 201 may be improved.

The second insulation layer 400 may include a material having electrical insulation and fire resistance characteristics.

Specifically, the second insulation layer 400 may include a base material (not shown), and a mica layer (not shown) provided on one surface or each of both surfaces of the base material. The second insulation layer 400 may be, for example, a combined mica tape manufactured by crushing mica raw ore to make paper by the same method as papermaking, and then coating a base material by using an epoxy adhesive, a silicone adhesive, or the like, followed by drying.

The base material is not limited as long as having supporting force. For example, the base material may be selected from a fiber base material, a polymer film, or the like. A glass fiber may be used as the fiber base material, and this glass fiber may be in the form of a tape such as S-glass or E-glass. However, lower-grade tapes such as glass cloth tape or woven glass fabric, are capable of being used. In addition, a polymer film such as a polyethylene, polyimide, or aromatic polyamide film, may be used as a material of the polymer film.

The mica layer may include a mica material. A mica may be one or more selected from, for example, phlogopite (KMg₃AlSi₃O₁₀(OH,F)₂), muscovite (KAl₂(AlSi)₄O₁₀(OH,H)₂)), and the like, which is a type of mica.

The mica may include a soft mica material including phlogopite as a main raw material. A soft mica is inferior to a hard mica including muscovite as a main material in terms of the performance as an electrical insulator, but is superior in terms of the thermal resistance characteristic to have merit that a molecular structure even at 900°C is maintained. Thus, the second insulation layer 400 may include the soft mica as a material for electric insulation and fire resistance performance.

### Second embodiment

As a second embodiment of the present invention, a secondary battery module assembly (not shown) according to the present invention may include a plurality of secondary battery modules (not shown), and an inter-module busbar 10 that electrically connects the secondary battery modules to each other. The inter-module busbar 10 may include a conductive unit 100 including an electrically conductive material, coating layers 200 and 201 with which a surface of the conductive unit 100 is coated, a first insulation layer 300 that surrounds the coating layers 200 and 201, and a second insulation layer 400 that surrounds the first insulation layer 300. Discharge lines 310 and 320 which communicate with the outside and are provided to discharge gases may be defined in the first insulation layer 300. The details described in the first embodiment may substitute for the details of the inter-module busbar 10.

Although the present invention has been described with reference to the limited embodiments, the present invention is not limited thereto. Changes and modifications to the embodiments can be made without departing from the spirit and scope of the present invention, and those with ordinary skill in the technical field of the present invention pertains will be understood that these changes and modifications are to be regarded to be in the scope of the present invention.

### [Description of the Symbols]

10: Inter-module busbar
100: Conductive unit
110: Connecting part
120: Coupling part
200, 201: Coating layer
300: First insulation layer
310, 320: Discharge line
311, 321: First discharge hole
312, 322: Communication line
313: Second discharge hole
400: Second insulation layer

## Claims

1. An inter-module busbar comprising:
a conductive unit configured to electrically connect a plurality of objects to each other;
a first insulation layer configured to surround the conductive unit; and
a second insulation layer configured to surround the first insulation layer,
wherein a discharge line, which communicates with the outside and is provided to discharge a gas, is defined in the first insulation layer.

2. The inter-module busbar of claim 1, further comprising a coating layer disposed between the first insulation layer and the conductive unit to coat a surface of the conductive unit with a powder.

3. The inter-module busbar of claim 2, wherein the coating layer has a surface roughness that is greater than a surface roughness of the conductive unit.

4. The inter-module busbar of claim 2, wherein the coating layer has a surface roughness that is less than a surface roughness of the conductive unit.

5. The inter-module busbar of claim 3 or 4, wherein the first insulation layer is in close contact with the coating layer.

6. The inter-module busbar of claim 5, wherein the first insulation layer comprises a silicone material.

7. The inter-module busbar of claim 1, wherein the discharge line comprises:
a first discharge hole defined in an outer surface of the first insulation layer, and exposed to the outside; and
a communication line having one end connected to the first discharge hole, extending in a longitudinal direction of the first insulation layer, and provided to define an empty space inside the first insulation layer.

8. The inter-module busbar of claim 7, wherein the first discharge hole is defined in one end of the first insulation layer, and provided at a position spaced a predetermined distance from the second insulation layer.

9. The inter-module busbar of claim 8, wherein the discharge line further comprises a second discharge hole defined in the other end of the communication line,
wherein the second discharge hole is defined in the other end of the first insulation layer.

10. The inter-module busbar of claim 1, wherein the discharge line is provided in plurality,
wherein the plurality of discharge lines are disposed to be parallel to each other in a longitudinal direction of the first insulation layer, and are disposed to be spaced apart from each other according to a predetermined arrangement.

11. The inter-module busbar of claim 10, wherein the discharge lines are disposed to be more biased to a direction in which the second insulation layer is disposed.

12. The inter-module busbar of claim 1, wherein the conductive unit connects a plurality of secondary battery modules to each other.

13. The inter-module busbar of claim 12, wherein the conductive unit comprises:
a connecting part; and
a coupling part provided in each of both distal ends of the connecting part to be coupled to the secondary battery module.

14. The inter-module busbar of claim 1, wherein the second insulation layer is a mica tape comprising a mica material.

15. A secondary battery module assembly comprising:
a plurality of secondary battery modules; and
an inter-module busbar configured to electrically connect the secondary battery modules to each other,
wherein the inter-module busbar comprises:
a conductive unit configured to electrically connect the plurality of secondary battery modules to each other;
a first insulation layer configured to surround the conductive unit; and
a second insulation layer configured to surround the first insulation layer,
wherein a discharge line, which communicates with the outside and is provided to discharge a gas, is defined in the first insulation layer.
